# EUROPEAN PATENT SPECIFICATION

(11) **EP 1 232 469 B1**
(45) Date of publication and mention of the grant of the patent: **08.03.2006**
(21) Application number: 00965303.1
(22) Date of filing: 21.09.2000
(51) Int. Cl.: G06K 7/00

(54) **POINT OF SALE AND DISPLAY ADAPTER FOR ELECTRONIC TRANSACTION DEVICE**
VERKAUFSSTELLEN UND ANZEIGENADAPTER FÜR ELEKTRONISCHE TRANSAKTIONSEINRICHTUNG
ADAPTATEUR DE POINT DE VENTE ET D'AFFICHAGE POUR DISPOSITIF DE TRANSACTION ELECTRONIQUE

(30) Priority: 15.11.1999 US 440529; 06.06.2000 US 587998
(43) Date of publication of application: 21.08.2002
(73) Proprietor: C-Sam, Inc., Downers Grove, IL 60515 (US)
(72) Inventor: PITRODA, Satyan, G., Downers Grove, IL 60515 (US); PATEL, Merul, London SE1 3TQ (GB)
(74) Representative: Jackson, Richard Eric
(86) International application number: PCT/US2000/026015
(87) International publication number: WO 2001/037200

(56) References cited:
- EP-A- 0 700 024
- FR-A- 2 737 794
- US-A- 4 575 621
- US-A- 4 701 601
- US-A- 4 973 828
- US-A- 5 157 247
- US-A- 5 276 311
- US-A- 5 590 038
- US-A- 5 955 961
- US-A- 5 969 333

## Description

### Field Of Invention

This invention relates generally to adapting an electronic transaction device to conventional point of sale terminals. In particular, the invention relates to an adapter that dynamically emulates a magnetic stripe of a conventional plastic card, metallic contacts of a smart card, or both and transmits promotional and/or transactional information to the electronic transaction device.

### Background

The subscriber base for wireless telephones is already enormously large and is forecast to grow rapidly. Some estimates put current wireless telephone subscribers at 400 million users globally, and telephone manufacturers estimate that one billion wireless telephones will be in use by 2004. Wireless telephones typically have a compact housing with microprocessor, memory, input and output circuits and a battery. Wireless telephones also include dialing, transmitting and receiving circuitry. There are various embodiments of wireless telephones, including analog (AMPS), Global Standard for Mobile Communication (GSM), code division multiple access (CDMA) and time division multiple access (TDMA). In addition to basic communications circuitry, wireless telephone manufacturers are adding features normally found on electronic organizers, such as date books, address books, and infra-red communications devices.

Personal Digital Assistants (PDAs) are also becoming very popular. PDAs are a form of handheld electronic organizer, typically having date books, address books, to-do lists, memo pads, and other features. PDAs typically include a compact housing with a hardware environment consisting of a microprocessor, memory, input and output circuits and a battery. Many PDAs include metallic contacts and infra-red circuitry for input and output circuitry. Various operating systems are available, as are various software applications. Operating systems for PDAs include Palm OS, Windows CE, and other operating systems. Some PDAs are integrating wireless communications.

Another type of handheld electronic device is a Universal Electronic Transaction Card ("UET Card"). UET Cards have been proposed to receive, store, and process information relating to a plurality of different accounts, thereby consolidating numerous cards into one card. See, for example, U.S. Patent Nos. 5,590,038 and 5,884,271. In one example of a Universal Electronic Transaction Card, the card stores electronic images of the plastic cards which it replaces, and allows a user to conduct a transaction at a Point of Sale Terminal (POS).

It is contemplated that these handheld devices will become integrated to one degree or another. For example, UET Cards have been proposed with many features of currently available PDAs. See, for example, the previously mentioned U.S. Patent Nos. 5,590,038 and 5,884,271. Also, as mentioned above, some wireless telephones are integrating PDA type functions, and some PDAs are integrating wireless communications. Additionally, PDAs, wireless telephones and other handheld computing devices may be programmed or otherwise configured and used to conduct electronic transactions. UET Cards, and computing devices programmed to perform electronic transactions, such as PDAs and wireless telephones, are generally referred to herein as "electronic transaction devices."

Generally, an electronic transaction device may be a handheld device configured to allow a user to electronically emulate some or all of various aspects of a traditional wallet containing an assortment of plastic cards, cash and cash equivalents. One of the advantages of an electronic transaction device is the fact that the device allows the storage and use of multiple plastic cards - multiple credit and debit cards, identification cards, multiple membership and affinity group cards etc. Existing credit card (and other plastic card) images may be electronically stored and reproduced on the electronic transaction device display. Receipts may also be stored, eliminating paper receipts. Electronic transaction devices may include additional features, such as wireless telephony and PDA features.

Another large installed base of equipment comprises Point of Sales (POS) terminals. POS terminals include terminals having plastic card magnetic stripe readers and terminals having smart card readers. POS terminals may also include printers for printing receipts. Also, POS terminals that print coupons and other promotional information based on purchases made during a transaction are known.

Plastic cards having a magnetic stripe are known to be used with POS terminals having magnetic stripe readers. Relevant industry standards for magnetic stripe cards include, but are not necessarily limited to, ISO 7810, ISO 7811, and ISO 7813. Some examples are plastic Credit Cards, Bank - Debit & Check Cards, Automatic Teller Machine Cards, Membership Cards, Business or Access Cards, Identification Cards, College Identification Cards, Airline Cards, and others. The magnetic stripe generally includes pre-recorded information, which may identify the card issuer, account number, identity of an authorized card user, or other relevant information. Typically, the magnetic stripe is used to establish the identity of the cardholder or enable a transaction. Such transactions may or may not be monetary in nature.

Another type of card is a "smart card." Smart cards are available with metallic contacts, without metallic contacts, and as hybrid cards. The standard for contact-type smart cards is ISO 7816. Contactless-type smart cards will be governed by the ISO 14443 standard. "Smart cards," as used herein, refers to cards adhering to one or both of these standards.

A typical POS may include a card reader, such as a card reader configured to read magnetic stripes conforming to ISO 7810, ISO 7811, and ISO 7813. By "swiping" a magnetic stripe card through the card reader, the card reader establishes the account number and identity of the cardholder. Such a POS reader may then communicate with the issuer of the card to determine the validity of the account and consequently approve or deny the transaction. Typically, receipts for transactions are printed on paper and returned to the card user.

POS card readers are not limited to sales transactions. In offices, manufacturing facilities, or business environments, for example, employers may issue plastic identification cards to employees with a magnetic stripe on the card. This enables the readers to establish the identity of the cardholder, unlock doors or gates, log in and log out the entry and exit times respectively and in certain cases compute wages. In a school, college or university, an identification card with the magnetic stripe allows students to access laboratories, libraries, and other campus facilities, store cash values for transactions on campus. In these situations, the magnetic stripe on the plastic card is an important component which enables the card to function in the targeted environment.

With an electronic transaction device, one possible way of using it at a POS for performing a transaction (depending on the environment in which the device is being used, the transaction may or may not be monetary in nature) is to transmit information through an infrared or proximity RF link or by wireless or wired telephone link. PDA's, wireless telephones, and UET Cards may be equipped with an infrared transceiver. Wireless telephones of course, include wireless telephone communications circuitry. However, sending information to and receiving information from a POS or terminal equipment (TE) would require the POS (or TE) to also be equipped with a corresponding transceiver, along with the supporting hardware, software and training for the personnel handling the equipment.

Currently existing POS terminals comprise an extensive infrastructure of card readers, both magnetic and smart card, and the supporting networks and protocols for communication. One potential hurdle for the widespread adoption of electronic transaction devices such as Universal Electronic Transaction Cards and similarly configured-PDA's and wireless telephones is compatibility with the existing infrastructure of magnetic card readers. For example, the prospect of including a pre-recorded magnetic stripe dedicated to one account on an electronic transaction device may impair one of the benefits of the electronic transaction device, namely, the ability to conduct transactions using a plurality of accounts. POS terminals may include a serial port, such as an RS-232 port, for outputting information to a printer: such an RS-232 port would not necessarily be configured for receiving information from an electronic transaction device. Reconfiguring such an RS-232 port for bidirectional data flow may require hardware changes, software changes or both. Also, retrofitting the established pre-existing base of POS terminals with a new communication port such as infra-red or radio frequency communication, would require both hardware and software modifications. Also, the introduction of such modifications may necessitate retraining of personnel that operate POS terminals. The cost of such modification is not trivial, considering the number and variety of POS terminals, such as grocery store registers, automatic teller machines, and pay-at-the-pump filling stations, to name a few.

US-A 4,701,601 discloses a transaction card having a magnetic stripe emulator as well as a smart card interface. The transaction card is adapted for use with presently available transaction terminals that include a sensor for reading a magnetic stripe. The subject card includes a transducer for generating a varying magnetic field corresponding to information typically encoded on a magnetic stripe. In operation, a microprocessor in the card extracts transaction data stored in a memory and supplies output signals to the transducer. The transducer generates a varying magnetic field corresponding to the transaction information which is read by the sensor in the transaction terminal. Claim 1 is delimited against this prior art.

### Summary

What is provided is an adapter for use with a conventional POS card reader to interface with PDA's, Wireless Phones, and other Handheld devices, through Infrared or RF media, such that signals received from the devices can be converted to conventional magnetic stripe and / or smart card format, as required by the conventional POS card readers. The adapter according to the invention is defined in claim 1. The housing may be approximately the size of a conventional credit card and may be fully reader-insertable.

The point of sale interface comprises a magnetic stripe emulator, a smart card emulator, or both. The magnetic stripe emulator may comprise at least one electromagnet. Two electromagnets may be used to emulate two tracks of a conventional magnetic card stripe. The receive circuit may comprise an infra-red receiver, a radio-frequency receiver, or other suitable circuit. The adapter may further include a transmit circuit, wherein the receive circuit and the transmit circuit include a transceiver. The adapter may further include a data buffer connected to the processor, the data buffer configured to purge data after a predetermined period of time or after a predetermined number of data transfer operations.

A method of using an adapter of the present invention is defined in Claim 16.

The step of converting the information corresponding to the selected card to a format readable by the card reader may further comprise emulating a magnetic stripe or emulating a smart card. The step of emulating a magnetic stripe may further comprise generating electromagnetic signals. The step of emulating a magnetic stripe may also further comprise receiving the information corresponding to the selected card, formatting the information corresponding to the selected card to conform with magnetic stripe conventions, and dynamically writing the formatted information to an electromagnet.

The step of placing the adapter in the card reader may occur before the step of transmitting information. Alternatively, the step of transmitting information may occur before placing the adapter in the card reader, and further comprises the step of buffering the information corresponding to the selected card in the adapter. The buffered information may be purged after the step of reading the buffered information at the card reader.

In another embodiment, an electronic transaction device is adapted for use with point of sale card readers, and includes a housing, adapted to fit in a pocket or purse, the housing including at least a reader-insertable portion capable of being inserted in the card reader, a processor, enclosed in the housing, adapted to process account information relating to at least one service institution account associated with a user of the electronic transaction device, a display, connected to the processor and adapted to display the account information, a memory, connected to the processor and adapted to store the account information; and a point of sale interface in the reader insertable portion of the housing, connected to the processor and adapted to transmit the account information to a point of sale card reader. The point of sale interface may comprise a magnetic stripe emulator, a smart card emulator, or both.

### Brief Description Of The Drawings

Figure 1 is an illustration of one example of an adapter of the present invention.
Figure 2 is an illustration of one example of an adapter of the present invention in combination with a conventional magnetic stripe card reader.
Figure 3 is an illustration of one example of an adapter of the present invention in use with a POS and electronic transaction device.
Figure 4 is a flow chart of transmitting promotional information to an electronic transaction device.
Figure 5 is an illustration of an example of the adapter of the present invention in use with a transaction service provider and a POS.
Figure 6 is a flow chart of an example of steps for leading promotional information from a transaction service provider to an electronic transaction device.
Figure 7 is an illustration of an electronic transaction device in conjunction with an example of the adapter card of the present invention.
Figure 8 is an illustration of an adapter and card reader of the present invention.
Figure 9 is a flow chart of a transaction.
Figure 10 is an illustration of a conventional plastic card with a magnetic stripe.
Figure 11 is an illustration of a conventional plastic card with a magnetic stripe and a conventional magnetic stripe card reader.
Figure 12 is an illustration of an example of an electronic magnetic coil of one example of the present invention.
Figure 13 is an illustration of an example of an adapter of the present invention having a magnetic stripe POS interface.
Figure 14 is another illustration of the example of the adapter card having a magnetic stripe POS interface.
Figure 15 is an illustration of another example of an adapter of the present invention having a smart card POS interface.
Figure 16 is another illustration of the example of an adapter card having a smart card POS interface.
Figure 17 is an illustration of another example of an adapter of the present invention having a smart card POS interface and a magnetic stripe POS interface.
Figure 18 is an illustration of another example of an adapter card of the present invention.
Figure 19 is a flow chart of a method of use of the present invention.
Figure 20 is an illustration of an electronic transaction device including another example of the present invention.
Figure 21 is a block diagram of an electronic transaction device including another example of the present invention.

### Detailed Description

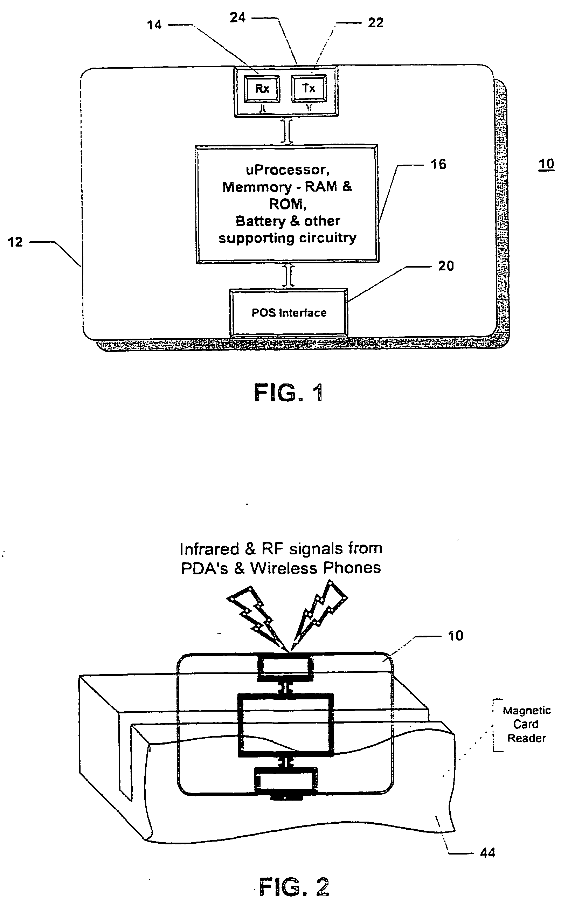

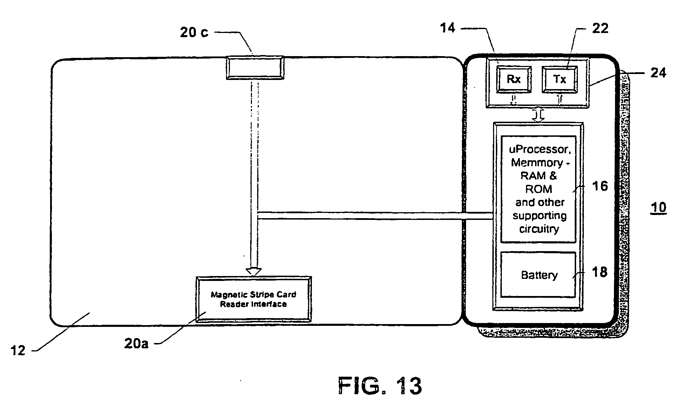

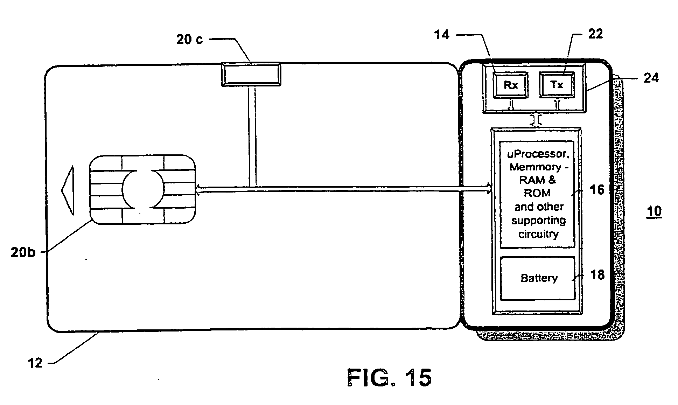

Referring to Figure 1, one embodiment of an adapter 10 for electronic transaction devices is illustrated. A housing 12 encloses a receive circuit 14, a processor 16, a battery 18 (Fig. 13), and a POS interface circuit 20. The POS interface circuit 20 may comprise a magnetic stripe interface 20a (Fig. 13), a smart card interface 20b (Fig. 15), a communication port interface 20c (Figs. 13 & 15), a combination of magnetic stripe, smart card, and communication port interfaces, or other suitable POS interfaces.

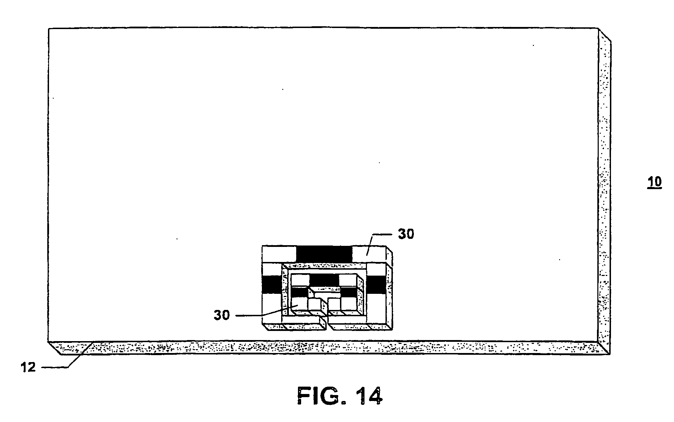

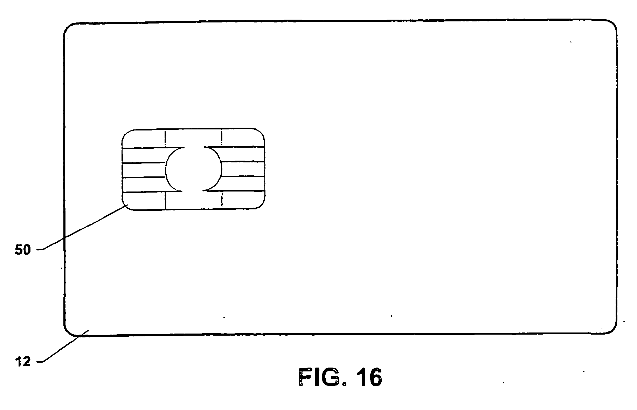

The housing 12 may have external dimensions approximately the same as conventional plastic cards with magnetic stripes. See Figures 14, and 16. In the alternative, referring to Figures 13, 15, and 18, the housing 12 may be thicker, or otherwise larger or smaller than, a conventional plastic card, and further include a portion 36 that may be inserted into a conventional card reader 44.

The receive circuit 14 may comprise an infra-red receive circuit, a proximity radio-frequency circuit, a wireless application protocol (WAP) circuit, a metallic contact circuit, or other suitable circuit, or any combination thereof. Alternatively, receive circuit 14 may further comprise a transmit circuit 22, and thereby comprise a transceiver 24. The processor 16 takes the data received by the receive circuit 14 and processes the data into a format compatible with a conventional card reader 44.

The processor 16 may be configured to have identification information, such as a unique identification number or other information. For example, if used in a retail store environment, the processor may be configured with the retail store name, location, and department within the store. The processor may also be configured with a unique identification number. In another example, if privately used by the user of an electronic transaction device, the processor may be configured with the name, address, and telephone number of the user. This information may be programmed by the card manufacturer, issuer, or user.

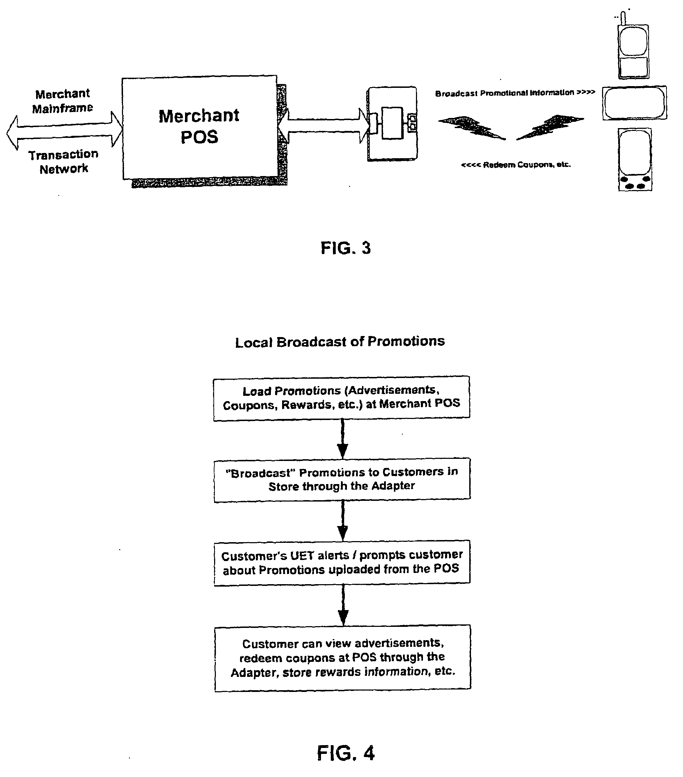

Referring to Figures 3 and 4, a POS terminal may be configured to generate promotional information. For example, coupon printers are known which print paper coupons in response to purchases of items at a grocery store POS. The adapter 10 may be configured to receive promotional information, such as electronic versions of checkout coupons, and transmit the coupons to the electronic transaction device during a transaction. In addition to checkout-type coupon, additional promotional information may include advertising, sale items, loyalty rewards points, and awards.

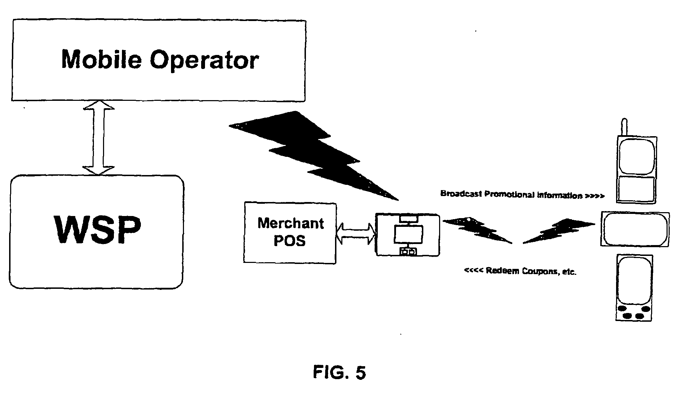

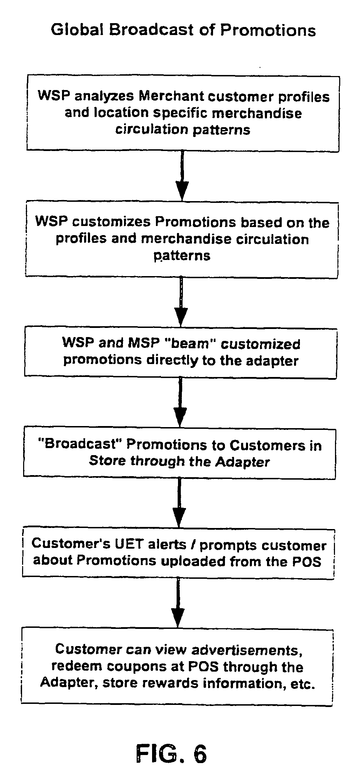

Also, a POS terminal may be configured to generate promotional information based on other criteria. Referring to Figures 5 and 6, for example, a merchant may establish a relationship with a transaction service provider. See, System And Methods For Servicing Electronic Transactions, Serial No. 09/372,365. The Transaction Service Provider may provide the merchant with analyses of customer profiles, buying patterns, and/or sales patterns for each POS which could be used to select promotional information. The Transaction Service Provider may also provide promotional information directly to a POS based on the above analyses. The POS may then transmit the promotional information to one or more electronic transaction devices through adapter 10.

An electronic transaction device may be configured to filter promotional information such as accepting or rejecting certain types of promotional information. For example, an electronic transaction device may be programmed to accept promotional information relating only to items on shopping list stored on the electronic transaction device. Alternatively, the electronic transaction device may be programmed to accept promotional information relating only to certain brands of items, and reject promotional information relating to competing brands.

In another example, the transmission of promotional information is not limited to a POS terminal, but may be used in various locations in a retail environment. In one example, an adapter 10 may be located in the deli department of a grocery store. Using proximity RF or Ir standards the adapter 10 may broadcast promotional information to any electronic transaction device coming within its range. As before, the electronic transaction device may be programmed to filter any such broadcasted promotional information.

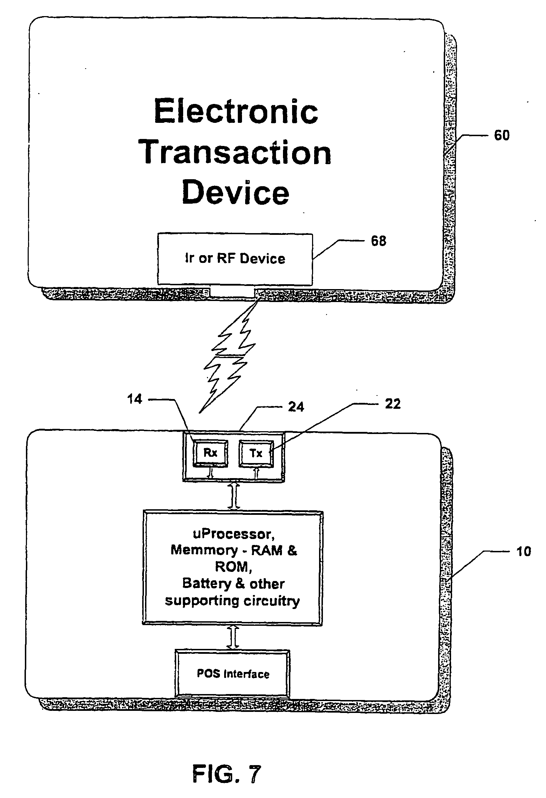

Referring to Figures 2 and 7, in use, the adapter 10 is placed in the card reader 44 with the POS interface circuit 20 positioned near the sensors of the card reader 44. The adapter 10 may be held stationary during a read operation. An electronic transaction device 60 transmits the information via I/O interface 68 that would typically be pre-recorded on a magnetic stripe 42 or smart card chip to the adapter 10. The adapter 10 receives the information, formats the information to conform with conventional card reader formats, and writes data to the POS interface 20. In the case of magnetic stripe emulation, reliability may increase because the rate of the data being transmitted from the adapter 10 to the card reader 44 is now controlled by the hardware and software of the electronic transaction device and adapter 10, rather than by a "swipe" of a card through a card reader 44.

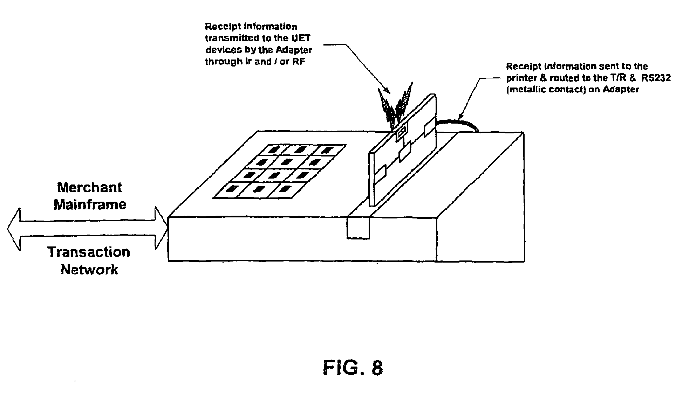

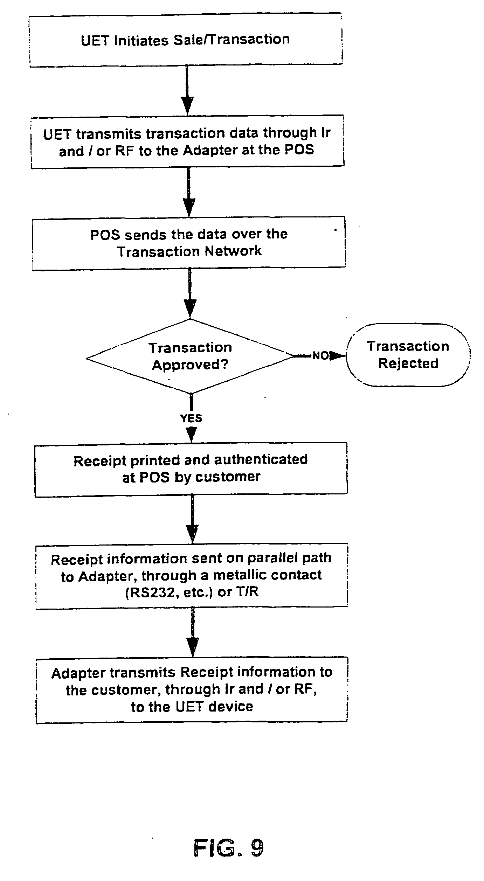

Referring to Figures 8 and 9, the adapter 10 may be connected to a communicator port on card reader 44 POS communication port 20c by a cable. The communicator port may be, for example, an RS-232 type serial port that outputs information to be printed on a paper receipt. Other ports communication include parallel port and USB ports.

The conventional hardware and software of card readers 44 do not require change. In the example of an adapter 10 with the electromagnets 30 simulating a magnetic stripe 42, data is dynamically written to the POS interface circuit 20 to emulate a conventional card swipe. Accordingly, the adapter card neither has "static" nor "spatially coded" data. The processor 16 and POS interface circuit 20 convert digital data into an alternating current signal through the electromagnets 30, which induce flux changes in the reading sensor. The flux changes correspond to the motion of a static pattern of magnetic bits past a sensor. The magnitude of the flux change induced by the coil is within defined standards for conventional magnetic stripe cards.

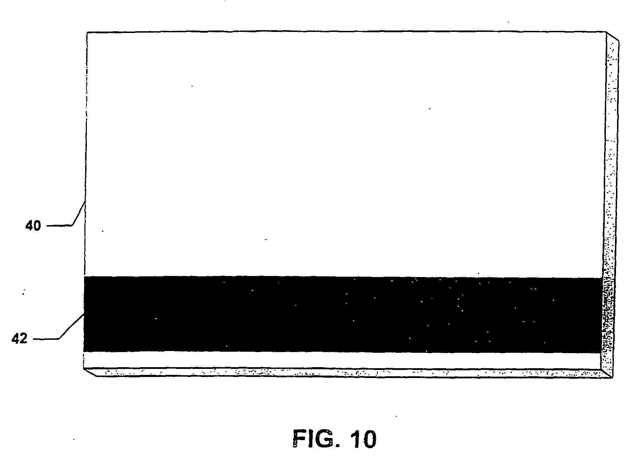

The POS interface 20 may be designed to dynamically emulate a conventional static magnetic stripe 42 on a conventional plastic card 40. In the context of emulating a conventional plastic credit card, such emulation may include conforming signal strength and data formats to relevant industry standards, such as ISO 7810, 7811, and 7813. Referring to Figure 10, such a conventional typical plastic card 40 including a magnetic stripe 42 is illustrated. The thickness of such a card is about -0.75 mm. The dimensions of the actual stripe may differ from one card manufacturer to another, but each stripe typically has information magnetically encoded in the form of two to three tracks. These tracks contain data magnetized on the stripe 42. The data is generally pre-recorded by the card issuer and is not configurable by the card user. In the context of cards other than conventional plastic credit cards, emulating a magnetic stripe may involve different relevant standards.

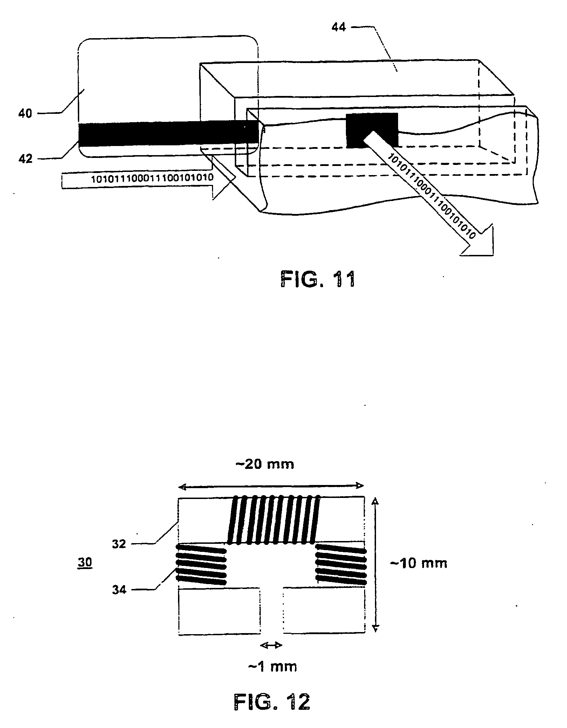

Referring to Figure 11, a cut out front view of a conventional magnetic card reader 44 is illustrated. The card reader 44 may be connected to a cash register and a bar code reader at the POS of a merchant, or may be connected to some other terminal equipment in a non-retail environment. The card reader 44 may be connected to a peripheral or integral printer for printing paper receipts. The card reader 44 may also include the communication port that outputs information to be printed on a paper receipt. Figure 11 also shows a plastic card 40, with the information on the magnetic stripe 42, being "swiped" through the card reader 44. The pre-recorded data on the conventional plastic card 40 may be thought of as static, spatially coded data. The data is "static" because it typically does not change value over time. The data is "spatially coded" because the magnetic information is in sequence from one end of the stripe to the other, and does not change location.

Figure 11 shows an arrow along the length of the stripe, which indicates the direction in which the card is being swiped. The 1's and 0's on the arrow are symbolic of the digital data magnetized on the stripe. This static data on the card is stored using frequency encoding. Another arrow, leaving the reader, depicts the information being read off the card and being sent over a network, typically for validation to the card issuer.

In this example, the pre-recorded "0" encoded spatially first on the magnetic stripe 42 is read chronologically first by the magnetic card reader 44. The plastic card 40 is swiped quickly through on a groove provided to guide the plastic card 40 through the card reader 44, enabling sensors on the card reader 44 to read the spatial information magnetized on the tracks. The swiping motion of the spatially-encoded data of the plastic card 40 past the stationary sensors of the card reader 44 effects a transmission of the spatially encoded data in time. The rate of transmission is determined by the speed at which the plastic card 40 is swiped. Since the rate of "swipe" is often controlled by a person, card readers 14 are designed with broad tolerances. The typically induced signal strength when a plastic card 40 with a magnetic stripe 42 is swiped in a card reader 44 is ~20mV.

Referring to Figures 12, 13, and 14, one example of a POS interface circuit 20a comprising a magnetic field circuit is illustrated. The illustrated example is an electromagnet 30 having a core lamination 32 wrapped with a wire coil 34. A laminate of -0.5 mm thickness may be used, with a total assembly thickness at -0.75 mm, thus maintaining the same overall thickness as conventional plastic cards. The wire coil 34 may comprise 42 gauge copper wire.

Referring to the example illustrated in Figure 14, there are two electromagnets 30, positioned on the housing 12, so that when the adapter 10 is placed in a card reader 44, the electromagnets 30 are aligned with the sensors on the magnetic card reader 44. If the housing 12 is of an embodiment with only a portion that may be inserted in the card reader, the electromagnets 30 of the POS interface circuit 20a are substantially located in the insertable portion. The electromagnets 30 are embedded in the housing in the approximate position of one or more tracks of a magnetic stripe. In the illustrated example, two electromagnets 30 are illustrated, each coil emulating one track of a pre-recorded magnetic stripe. However, one electromagnet 30 may be used to emulate a single track, or three or more electromagnets 30 may be used to emulate three or more tracks. In the given example of electromagnets 30, the inductance of one coil was recorded as ∼1mH and with a current of 10mA at 4kHz a signal strength of 25mV was generated in the card reader.

The method of dynamically writing data to a set of coils may also be achieved under a different set of physical parameters for the electromagnets 30. Also, devices for producing a dynamically changeable magnetic field other than electromagnets 30 may be used without departing from the scope of the invention.

Referring to Figure 8, the communication port interface 20c may be connected to the communication port on Card Reader 44 to receive information to be printed on a paper receipt. The adapter 10 may then format the receipt information and transmit it to the electronic transaction device via the transmit circuit 22 of transceiver 24.

Referring to Figures 15 and 16, an alternative embodiment of POS interface circuit 20b comprising a smart card interface 50 having metallic contacts 52 is illustrated. "Smart cards" are known plastic cards having electronic storage of information in lieu of, or in addition to, a magnetic stripe. Smart card readers read information from "Chip on Plastic" by physical (metallic) contact with the IC on the Smart Card. According to ISO 7816, eight contacts are provided on a smart card; I/O (serial date input and output); Vpp (programming voltage input); GND (ground reference voltage); CLK (clock signal); RST (reset); Vcc (power supply); and two contacts reserved for future use. ISO 7816 also provides for contact size, position, electrical signal descriptions, and operating procedure. Emulation of a smart card interface generally involves providing contacts and formatting data in adherence with relevant industry standards, such as, but not limited to, ISO 7816. There may be additional standards to emulate, such as ISO 14443, and other types of smart cards other than credit cards having their own standards.

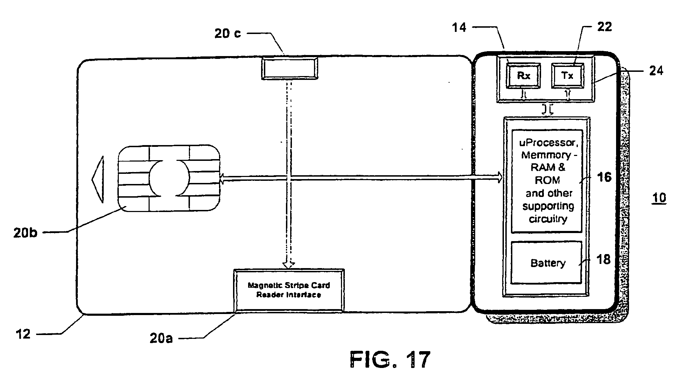

Referring to Figure 17, another alternative embodiment of the adapter 10 is illustrated. In this embodiment, both POS interface 20a comprising electromagnets 30 and POS interface 20b comprising a smart card interface 50 are incorporated on a single adapter 10. Additionally, a metallic interface for communicating with devices or networks other than POS terminals may be included. For example, interfaces for wired or wireless telephone circuits may be provided, as may be interfaces for LAN computer networks.

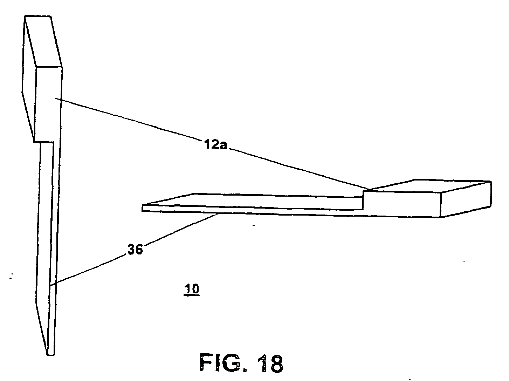

In an alternative embodiment, illustrated in Figure 18, housing 12 is not necessarily the same size as a conventional credit card. In the illustrated example, the adapter 10 may be thicker than a conventional credit card in some places, to accommodate circuitry or batteries or the like. The adapter 10 may further comprise a housing 12a having a portion 36 that is insertable in a card reader 44. The POS interface 20, electromagnets 30, for example, may be located in the reader insertable portion 36. In another example, the adapter 10 may be configured as a lid or cover for an electronic transaction device, wired into the electronic transaction device, the cover being flipped open for use.

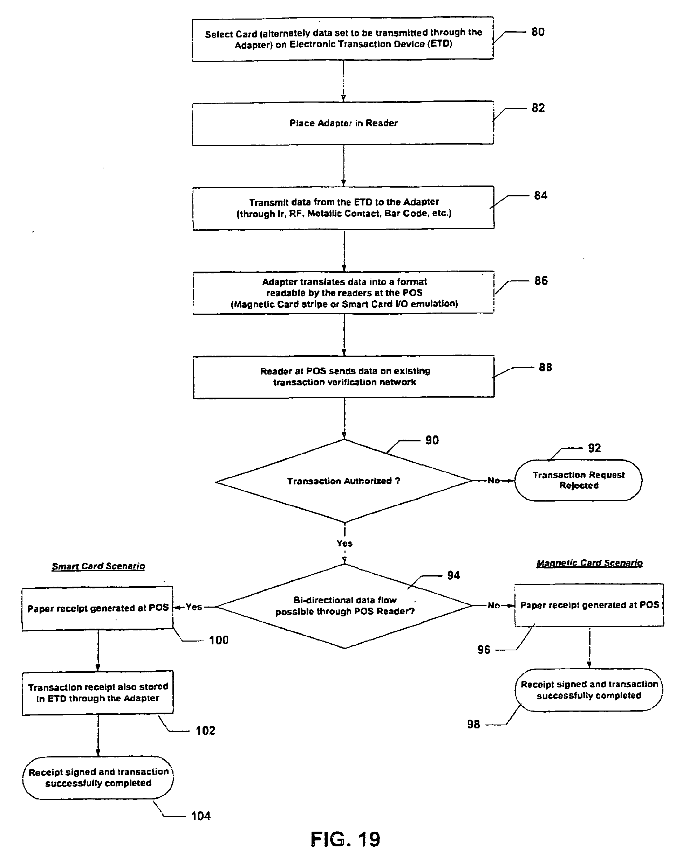

Referring to Figure 19, in use, in step 80, a user selects a card to be transmitted to the adapter. In step 82, the adapter 10 is placed in the card reader 44 with the POS interface circuit 20 positioned in the sensor head of the card reader 44. Rather than recording predetermined data spatially on a card, and requiring a "swipe," the adapter 10 may be held stationary during a read operation. In step 84, an electronic transaction device 60 transmits the information via I/O interface 68 that would typically be pre-recorded on a magnetic stripe 42 to the adapter 10 by infra-red circuitry, proximity radio frequency circuitry, or other suitable wired or wireless communication means. In step 86, the adapter 10 receives the information via receive circuit 14 (alternatively, transceiver 24), formats the information to conform with conventional card reader formats, and dynamically writes data to the POS interface 20 (in the illustrated example, electromagnets 30) thereby emulating a swipe of a conventionally pre-recorded magnetic stripe 42.

The adapter 10 writes the data at a rate and format in which card readers 44 are designed to read the data. In one illustrated example, a processor 16 dynamically writes data to the POS interface circuit 20. The electromagnets 30 of the POS interface circuit 20 on being energized by the battery, generate a magnetic field. The processor 16 is supported by digital to analog converters and software routines and dynamically writes data to the POS interface circuit 20. The magnetic fields generated by the POS interface circuit 20 are sensed by the card reader 44. Because the adapter 10 is not "swiped," data is dynamically written to the POS interface circuit 20 emulate a conventional card swipe. The processor 16 and POS interface circuit 20 converts digital data into an alternating current signal through the electromagnets 30, which induce flux changes in the reading sensor.

In the alternative embodiment including a POS interface circuit 20a comprising a smart card interface 50, the method of use is similar. The electronic transaction device 60 transmits information to the adapter 10, which processes the information and emulates a conventional smart card via contacts 52.

In steps 88 and 90, the card reader 44 sends the data necessary for authorization of the transaction and acts upon the response. If authorization is denied in step 90, the transaction is rejected in step 92.

A check is made in step 94 as to whether bi-directional data flow is possible through the card reader 44. Return communication of information from the adapter 10 to the electronic transaction device is optional. For example, the POS terminal may not be configured to return an electronic receipt to the electronic transaction device through the adapter. In such an example, a conventional paper receipt may be generated and signed in steps 96 and 98. Additionally, the adapter 10 may return confirmation information regardless of whether the card reader 44 is capable of bi-directional data, including an indication that the account information was received and processed by the adapter. Conformation information may also include identification information of the adapter 10, such as retail store location, department, the date of purchase, and a unique identification number.

It is contemplated that POS terminals may be equipped to transmit transactional information to the adapter, such as an electronic receipt. For example, smart card interfaces may be used to transmit information from the POS to the adapter. Also, a conventional POS terminal may include a communication port, such as an RS-232 serial port, for outputting information to be printed on a paper receipt. When the serial port of the POS terminal is connected to the adapter 10 via the serial interface 20c receipt the information may be transmitted from the POS terminal to the Adapter 10. In this case, the POS may generate a paper receipt in step 100 and transmit the transactional information, including, for example, an electronic receipt, to the electronic transaction device 60 via the adapter 10, in step 102. The receipt may be signed in step 104.

It is contemplated that the user of an electronic transaction device 60 may not want to hand an electronic transaction device to a merchant. For example, in a restaurant, credit card transactions are often accomplished by handing a conventional plastic credit card to a member of the waitstaff who, in turn, takes the card to a card reader, swipes the card through the card reader, and returns the card to the user. Due to the extensive amount of information included on an electronic transaction device 60, however, users may be reluctant to hand such a device to the waitstaff.

According to another example of the present invention, therefore, the adapter 10 may temporarily buffer information from an electronic transaction device to subsequently conduct a transaction outside the range of the electronic transaction device's infra-red or radio frequency capabilities. Continuing with the restaurant scenario, the waitstaff presents the adapter 10 and the user transmits relevant information from the user's electronic transaction device 60 to the adapter 10. The adapter 10 stores the information in a buffer, such as memory, registers, or other suitable storage means, until the waitstaff has an opportunity to run the adapter 10 through the card reader 44. After being read, the buffer is purged. The data buffer may be purged after a predetermined period of time or after a predetermined number of data transfers.

Optionally, the adapter 10 may be configured to buffer information from more than one electronic transaction device 60. Such a configuration would facilitate persons sharing the expenses of a transaction, such as when splitting the bill at a restaurant. Also, such a configuration would facilitate collecting payment information corresponding to more than one transaction.

In an alternative embodiment, the adapter 10 can receive information from the card reader 44 and transmit the information back to the electronic transaction device. In this embodiment, the receive circuit 14 further comprises a transmit circuit 22. Continuing with the restaurant scenario, the POS terminal transfers details of the transaction to the adapter 10. The waitstaff returns the adapter 10 to the proximity of the electronic transaction device 60, and transfers the details of the transaction to the electronic transaction device 60.

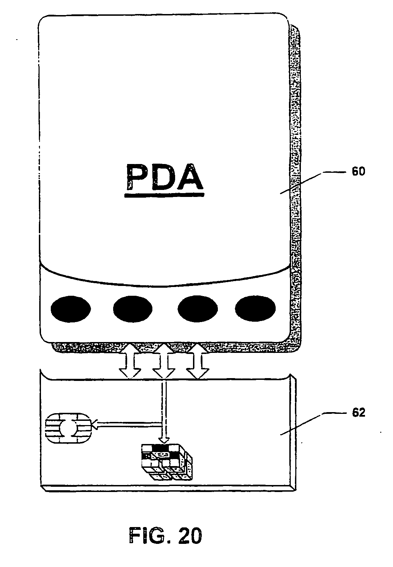

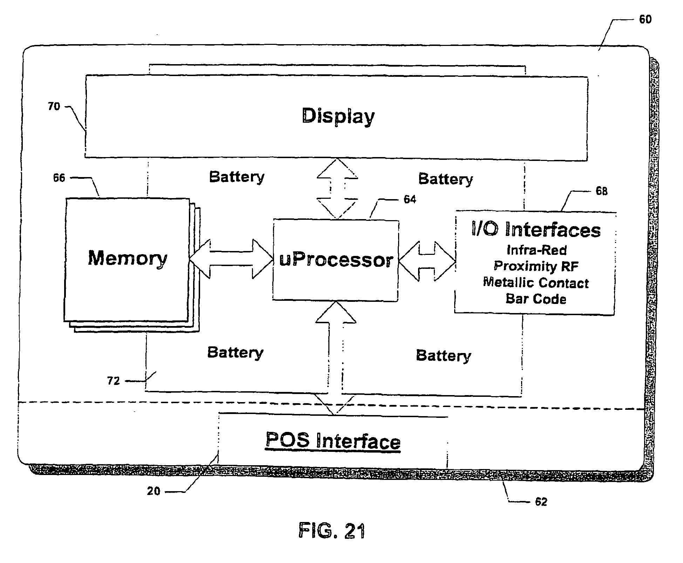

The present invention is not limited to stand-alone adapters. In another alternative embodiment, illustrated in Figures 20 and 21, an electronic transaction device 60 includes an extension 62 that includes the POS interface circuit 20. The electronic transaction device 60 may comprise a microprocessor 64, coupled with memory 66 adapted to store an operating system, BIOS, applications and user data, I/O interfaces 68, display 70, and battery 72. One example of interacting with an electronic transaction device 60 is when display 70 further comprises a touch sensitive liquid crystal display. Other modes of interacting include keypads (in the example of a wireless telephone), pointing devices and conventional reduced-size "QWERTY" keyboards. Typical input and output interfaces that may comprise I/O interface 68 may comprise infrared devices, including those adhering to IrDA standards, proximity radio frequency devices, such as the "Bluetooth" standard, metallic contacts, such as the RS-232 standard, or bar codes.

The data flow to the POS interface 20 is controlled by the microprocessor 64 and other supporting hardware and software of the electronic transaction device 60. The extension 62 may be part of a housing for the electronic transaction device 60, or a separate add-on module or circuit board. For example the extension 62 may plug into an expansion slot on an electronic transaction device 60, or comprise a lid or cover for the electronic transaction device 60 that may be flipped open for use. In another example, illustrated in Figure 21, the extension 62 is clipped on to the serial port of an electronic transaction device 60.

## Claims

1. An adapter (10) for use with point of sale card readers and electronic transaction devices, the adapter comprising:
a housing (12), including at least a reader-insertable portion capable of being inserted in the card reader (14);
a transceiver circuit (24) in the housing adapted to receive information from
an electronic transaction device (60) and to transmit information to the electronic transaction device (60);
**characterised by**: by:
a processor (16) in the housing connected between the transceiver circuit and a point of sale interface (20) in the reader insertable portion of the housing, the point of sale interface (20) comprising a communication circuit (20c) connected to the processor and coupled to the point of sale card reader, and adapted to receive receipt information and the point of sale interface (20) being adapted to transmit information received from the electronic transaction device.

2. The adapter (10) of claim 1, wherein the entire housing (12) is reader insertable.

3. The adapter (10) of claim 2, wherein the housing (12) is substantially the same size as a conventional credit card.

4. The adapter (10) of claim 1, wherein the point of sale interface (20) comprises a magnetic stripe emulator.

5. The adapter (10) of claim 4, wherein the magnetic stripe emulator comprises a plurality of electromagnets (30).

6. The adapter (10) of claim 1, wherein the point of sale interface (20) comprises a smart card emulator.

7. The adapter (10) of claim 1, wherein the point of sale interface (20) comprises a magnetic stripe emulator and a smart card emulator.

8. The adapter (10) of claim 1, wherein the transceiver circuit (24) comprises an infrared sensitive device.

9. The adapter (10) of claim 1, wherein the transceiver circuit (24) comprises a radio-frequency circuit.

10. The adapter (10) of claim 1, further comprising a data buffer connected to the processor (16) adapted to store information received from the electronic transaction device (60).

11. The adapter (10) of claim 10, wherein the data buffer is configured to purge at least a portion of information received from the electronic transaction device (60) after a predetermined period of time.

12. The adapter (10) of claim 10, wherein the data buffer is configured to purge information received from the electronic transaction device (60) after a predetermined number of data transfer operations.

13. The adapter (10) of claim 10, wherein the data buffer is included in the processor (16).

14. The adapter (10) of claim 1, wherein the communication circuit (20c) comprises a serial port.

15. The adapter (10) of claim 1, wherein the communication circuit (20c) comprises an RS-232 port.

16. A method of using an adapter (10) according to any of claims 1 to 15 with a point of sale card reader (41), comprising:
a) selecting a card on an electronic transaction device (60);
b) placing the adapter (10) in the card reader (41);
c) transmitting information corresponding to the selected card from the electronic transaction device (60) to the adapter (10);
d) the adapter (10) converting the information corresponding to the selected card to a format readable by the card reader (41);
e) the card reader (41) reading the converted information;
f) the card reader (41) outputting information to the adapter (10) via a communication port (44); and
g) the adapter (10) transmitting the information to the electronic transaction device (60).

17. The method of claim 16, wherein the step of converting the information corresponding to the selected card to a format readable by the card reader (41) further comprises emulating a magnetic stripe.

18. The method of claim 17, wherein the step of emulating a magnetic stripe comprises generating electromagnetic signals.

19. The method of claim 17, wherein the step of emulating a magnetic stripe further comprises:
a) receiving the information corresponding to the selected card;
b) formatting the information corresponding to the selected card to conform with magnetic stripe standards; and
c) dynamically writing the formatted information to an electromagnet.

20. The method of claim 16, wherein the step of converting the information corresponding to the selected card to a format readable by the card reader (41) further comprises emulating a smart card.

21. The method of claim 20, wherein the step of emulating a smart card further comprises:
a) receiving the information corresponding to the selected card;
b) formatting the information corresponding to the selected card to conform with smart card standards; and
c) dynamically writing the formatted information to electrical contacts conforming with smart card standards.

22. The method of claim 16, wherein the step of placing the adapter (10) in the card reader (41) occurs before the step of transmitting information.

23. The method of claim 16, wherein the step of transmitting information occurs before placing the adapter (10) in the card reader (41), and further comprising the step of buffering the information corresponding to the selected card in the adapter (10).

24. The method of claim 23, further comprising the step of purging the information corresponding to the selected card after the step of reading the magnetic fields at the card reader (41).

25. The method of claim 23, further comprising the step of purging the information corresponding to the selected card after a predetermined period of time.

26. The method of claim 23, further comprising the step of purging the information corresponding to the selected card after a predetermined number of data transfer operations.

27. The method of claim 16, further comprising the step of the adapter (10) transmitting information to the electronic transaction device (60).

28. The method of claim 27, wherein the step of the adapter (10) transmitting information to the electronic transaction device (60) includes transmitting confirmation information to the electronic transaction device (60).

29. The method of claim 27, wherein the step of the adapter (10) transmitting information to the electronic transaction device (60) includes transmitting an electronic receipt to the electronic transaction device (60).

30. The method of claim 23, further comprising the step of purging the information corresponding to the selected card after the step of the adapter (10) transmitting information to the electronic transaction device (60).

## Patentansprüche

1. Adapter (10) zur Verwendung mit Verkaufsstellen-Kartenlesern und elektronischen Transaktionsvorrichtungen, wobei der Adapter umfaßt:
ein Gehäuse (12), beinhaltend wenigstens einen Abschnitt, der in einen Leser einsetzbar ist, der fähig ist, in den Kartenleser (14) eingesetzt zu werden;
eine Transceiver- bzw. Sender-Empfänger-Schaltung (24) in dem Gehäuse, die adaptiert ist, um Information von der elektronischen Transaktionsvorrichtung (60) zu erhalten und Information an die elektronische Transaktionsvorrichtung (60) zu übermitteln,
**gekennzeichnet durch**:
einen Prozessor (16) in dem Gehäuse, der zwischen der Transceiverschaltung und
einem Verkaufsstellen-Interface (20) in dem in den Leser einsetzbaren Abschnitt des Gehäuses angeschlossen ist, wobei das Verkaufsstellen-Interface (20) eine Kommunikationsschaltung (20c) umfaßt, die mit dem Prozessor verbunden ist und
mit dem Verkaufsstellen-Kartenleser gekoppelt ist und adaptiert ist, um Information zu erhalten, und
das Verkaufsstellen-Interface (20) adaptiert ist, um Information zu übersenden, die von der elektronischen Transaktionsvorrichtung erhalten ist.

2. Adapter (10) nach Anspruch 1, wobei das gesamte Gehäuse (12) in den Leser einsetzbar ist.

3. Adapter (10) nach Anspruch 2, wobei das Gehäuse (12) im wesentlichen dieselbe Größe wie eine konventionelle Kreditkarte aufweist.

4. Adapter (10) nach Anspruch 1, wobei das Verkaufsstellen-Interface (20) einen Magnetstreifen-Emulator umfaßt.

5. Adapter (10) nach Anspruch 4, wobei der Magnetstreifen-Emulator eine Mehrzahl von Elektromagneten (30) umfaßt.

6. Adapter (10) nach Anspruch 1, wobei das Verkaufsstellen-Interface (20) einen Smart-Card-Emulator umfaßt.

7. Adapter (10) nach Anspruch 1, wobei das Verkaufsstellen-Interface (20) einen Magnetstreifen-Emulator und einen Smart-Card-Emulator umfaßt.

8. Adapter (10) nach Anspruch 1, wobei die Transceiverschaltung (24) eine auf Infrarot empfindliche Vorrichtung umfaßt.

9. Adapter (10) nach Anspruch 1, wobei die Transceiverschaltung (24) eine Radiofrequenzschaltung umfaßt.

10. Adapter (10) nach Anspruch 1, weiters umfassend einen Datenpuffer, der mit dem Prozessor (16) verbunden ist, der adaptiert ist, um Information zu speichern, die von der elektronischen Transaktionsvorrichtung (60) empfangen ist.

11. Adapter (10) nach Anspruch 10, wobei der Datenpuffer konfiguriert ist, um wenigstens einen Abschnitt der Information, die von der elektronischen Transaktionsvorrichtung (60) empfangen ist, nach einer vorbestimmten Zeitdauer zu löschen bzw. zu entfernen.

12. Adapter (10) nach Anspruch 10, wobei der Datenpuffer konfiguriert ist, um Information, die von der elektronischen Transaktionsvorrichtung (60) empfangen ist, nach einer vorbestimmten Anzahl von Datenübertragungstätigkeiten bzw. - vorgängen zu löschen.

13. Adapter (10) nach Anspruch 10, wobei der Datenpuffer in dem Prozessor (16) enthalten ist.

14. Adapter (10) nach Anspruch 1, wobei die Kommunikationsschaltung (20c) einen seriellen Port umfaßt.

15. Adapter (10) nach Anspruch 1, wobei die Kommunikationsschaltung (20c) einen RS-232 Port umfaßt.

16. Verfahren zum Verwenden eines Adapters (10) gemäß einem der Ansprüche 1 bis 15, mit einem Verkaufsstellen-Kartenleser (41), umfassend:
a) Wählen einer Karte auf einer elektronischen Transaktionsvorrichtung (60);
b) Anordnen des Adapters (10) in dem Kartenleser (41);
c) Übertragen von Information betreffend die gewählte Karte von der elektronischen Transaktionsvorrichtung (60) zu dem Adapter (10);
d) wobei der Adapter (10) die Information betreffend die gewählte Karte in ein Format umwandelt, das durch den Kartenleser (41) lesbar ist;
e) wobei der Kartenleser (41) die konvertierte bzw. umgewandelte Information liest;
f) wobei der Kartenleser (41) Information an den Adapter (10) über ein Kommunikationsport (44) ausgibt; und
g) wobei der Adapter (10) die Information zu der elektronischen Transaktionsvorrichtung (60) überträgt.

17. Verfahren nach Anspruch 16, wobei der Schritt eines Umwandelns bzw. Konvertierens der Information entsprechend der gewählten Karte in ein Format, das durch den Kartenleser (41) lesbar ist, weiters ein Emulieren eines Magnetstreifens umfaßt.

18. Verfahren nach Anspruch 17, wobei der Schritt eines Emulierens eines Magnetstreifens ein Generieren von elektromagnetischen Signalen umfaßt.

19. Verfahren nach Anspruch 17, wobei der Schritt eines Emulierens eines Magnetstreifens weiters umfaßt:
a) Empfangen der Information entsprechend der gewählten Karte;
b) Formatieren der Information entsprechend der gewählten Karte, um mit Magnetstreifenstandards übereinzustimmen; und
c) dynamisches Schreiben der formatierten Information zu einem Elektromagneten.

20. Verfahren nach Anspruch 16, wobei der Schritt eines Umwandelns der Information entsprechend der gewählten Karte in ein Format, das durch den Kartenleser (41) lesbar ist, weiters ein Emulieren einer Smart-Card umfaßt.

21. Verfahren nach Anspruch 20, wobei der Schritt eines Emulierens einer Smart-Card weiters umfaßt:
a) Empfangen der Information entsprechend der gewählten Karte;
b) Formatieren der Information entsprechend der gewählten Karte, um mit Smart-Card-Standards übereinzustimmen; und
c) dynamisches Schreiben der formatierten Information zu elektrischen Kontakten entsprechend den Smart-Card-Standards.

22. Verfahren nach Anspruch 16, wobei der Schritt eines Anordnens des Adapters (10) in dem Kartenleser (41) vor dem Schritt eines Übertragens von Information stattfindet.

23. Verfahren nach Anspruch 16, wobei der Schritt eines Übertragens von Information vor einem Anordnen des Adapters (10) in dem Kartenleser (41) stattfindet und weiters umfassend den Schritt eines Pufferns der Information entsprechend der gewählten Karte in dem Adapter (10).

24. Verfahren nach Anspruch 23, weiters umfassend den Schritt eines Löschens der Information entsprechend der gewählten Karte nach dem Schritt eines Lesens der Magnetfelder an dem Kartenleser (41).

25. Verfahren nach Anspruch 23, weiters umfassend den Schritt eines Löschens der Information entsprechend der gewählten Karte nach einer vorbestimmten Zeitdauer.

26. Verfahren nach Anspruch 23, weiters umfassend den Schritt eines Löschens der Information entsprechend der gewählten Karte nach einer vorbestimmten Anzahl von Datentransfertätigkeiten bzw. -vorgängen.

27. Verfahren nach Anspruch 16, weiters umfassend den Schritt, daß der Adapter (10) Information an die elektronische Transaktionsvorrichtung (60) überträgt.

28. Verfahren nach Anspruch 27, wobei der Schritt, daß der Adapter (10) Information an die elektronische Transaktionsvorrichtung (60) überträgt, ein Übertragen von Bestätigungsinformation an die elektronische Transaktionsvorrichtung (60) beinhaltet.

29. Verfahren nach Anspruch 27, wobei der Schritt, daß der Adapter (10) Information an die elektronische Transaktionsvorrichtung (60) überträgt, ein Übertragen eines elektronischen Erhalts an die elektronische Transaktionsvorrichtung (60) beinhaltet.

30. Verfahren nach Anspruch 23, weiters umfassend den Schritt eines Löschens der Information entsprechend der gewählten Karte nach dem Schritt, daß der Adapter (10) Information an die elektronische Transaktionsvorrichtung (60) überträgt.

## Revendications

1. Adaptateur (10) destiné à être utilisé avec un point de lecteurs de cartes de vente et de dispositifs de transaction électronique, l'adaptateur comprenant :
un boîtier (12) comprenant au moins une partie apte à être insérée dans un lecteur capable d'être insérée dans un lecteur de cartes (14) ;
un circuit émetteur-récepteur (24) dans le boîtier agencé pour recevoir des informations d'un dispositif de transaction électronique (60) et pour transmettre les informations au dispositif de transaction électronique (60), **caractérisé par** :
un processeur (16) dans le boîtier relié entre le circuit émetteur-récepteur, et
un point d'interface de vente (20) dans la partie apte à être insérée dans le lecteur du boîtier, le point d'interface de vente (20) comprenant un circuit de communication (20c) relié au processeur et couplé au point du lecteur de cartes de vente et agencé pour recevoir des informations de réception, et le point d'interface de vente (20) étant agencé pour transmettre des informations reçues à partir du dispositif de transaction électronique.

2. Adaptateur (10) selon la revendication 1, dans lequel tout le boîtier (12) est apte à être inséré dans le lecteur.

3. Adaptateur (10) selon la revendication 2, dans lequel le boîtier (12) est sensiblement de la même dimension qu'une carte de crédit classique.

4. Adaptateur (10) selon la revendication 1 dans lequel le point d'interface de vente (20) comprend un émulateur à bande magnétique.

5. Adaptateur (10) selon la revendication 4, dans lequel l'émulateur à bande magnétique comprend une pluralité d'électro-aimants (30).

6. Adaptateur (10) selon la revendication 1, dans lequel le point d'interface de vente (20) comprend un émulateur de cartes à puce.

7. Adaptateur (10) selon la revendication 1, dans lequel le point d'interface de vente (20) comprend un émulateur à bande magnétique et un émulateur de cartes à puce.

8. Adaptateur (10) selon la revendication 1, dans lequel le circuit émetteur-récepteur (24) comprend un dispositif sensible aux infrarouges.

9. Adaptateur (10) selon la revendication 1, dans lequel le circuit émetteur-récepteur (24) comprend un circuit de radiofréquences.

10. Adaptateur (10) selon la revendication 1, comprenant, en outre, un régulateur de données relié au processeur (16), agencé pour stocker les informations reçues du dispositif de transaction électronique (60).

11. Adaptateur (10) selon la revendication 10, dans lequel le régulateur de données est configuré pour purger au moins une partie des informations reçues à partir du dispositif de transaction électronique (60) après une période de temps prédéterminée.

12. Adaptateur (10) selon la revendication 10, dans lequel le régulateur de données est configuré pour purger les informations reçues à partir du dispositif de transaction électronique (60) après un nombre prédéterminé d'opérations de transfert de données.

13. Adaptateur (10) selon la revendication 10, dans lequel le régulateur de données est inclus dans le processeur (16).

14. Adaptateur (10) selon la revendication 1, dans lequel le circuit de communication (20c) comprend un port de série.

15. Adaptateur (10) selon la revendication 1, dans lequel le circuit de communication (20c) comprend un port RS-232.

16. Procédé d'utilisation d'un adaptateur (10) selon l'une quelconque des revendications 1 à 15, avec un point de lecteur de cartes de vente (41), comprenant :
a) la sélection d'une carte sur un dispositif de transaction électronique (60) ;
b) la mise en place de l'adaptateur (10) dans le lecteur de cartes (41) ;
c) la transmission des informations correspondant à la carte choisie à partir du dispositif de transaction électronique (60) à l'adaptateur (10) ;
d) la transformation avec l'adaptateur (10) des informations correspondant à la carte choisie au format apte à être lu par le lecteur de cartes (41) ;
e) la lecture du lecteur de cartes (41) des informations transformées ;
f) la sortie des informations du lecteur de cartes (41) à l'adaptateur (10) par l'intermédiaire d'un port de communication (44) ; et
g) la transmission avec l'adaptateur (10) des informations au dispositif de transaction électronique (60).

17. Procédé selon la revendication 16, dans lequel l'étape de transformer les informations correspondant à la carte choisie au format apte à être lu par le lecteur de cartes (41) comprend, en outre, l'émulation d'une bande magnétique.

18. Procédé selon la revendication 17, dans lequel l'étape d'émulation d'une bande magnétique comprend la génération de signaux électromagnétiques.

19. Procédé selon la revendication 17, dans lequel l'étape d'émulation d'une bande magnétique comprend, en outre :
a) la réception des informations correspondant à la carte choisie ;
b) le formatage des informations correspondant à la carte choisie pour se conformer aux standards de bande magnétique ; et
c) l'écriture dynamique des informations formatées à un électro-aimant.

20. Procédé selon la revendication 16, dans lequel l'étape de transformation des informations correspondant à la carte choisie à un format apte à être lu par le lecteur de cartes (41) comprend, en outre, l'émulation d'une carte à puce.

21. Procédé selon la revendication 20, dans lequel l'étape d'émulation d'une carte à puce comprend, en outre :
a) la réception des informations correspondant à la carte choisie ;
b) le formatage des informations correspondant à la carte choisie pour se conformer aux standards de carte à puce ; et
c) l'écriture dynamique des informations formatées aux contacts électriques se conformant aux standards de carte à puce.

22. Procédé selon la revendication 16, dans lequel l'étape de mise en place de l'adaptateur (10) dans le lecteur de cartes (41) se produit avant l'étape de transmission des informations.

23. Procédé selon la revendication 16, dans lequel l'étape de transmission des informations se produit avant la mise en place de l'adaptateur (10) dans le lecteur de cartes (41) et comprenant, en outre, l'étape de régulation des informations correspondant à la carte choisie dans l'adaptateur (10).

24. Procédé selon la revendication 23, comprenant, en outre, l'étape de purgeage des informations correspondant à la carte choisie après l'étape de lecture des champs magnétiques au lecteur de cartes (41).

25. Procédé selon la revendication 23, comprenant, en outre, l'étape de purgeage des informations correspondant à la carte choisie après une période prédéterminée de temps.

26. Procédé selon la revendication 23, comprenant, en outre, l'étape de purgeage des informations correspondant à la carte choisie après un nombre prédéterminé d'opérations de transfert de données.

27. Procédé selon la revendication 16, comprenant, en outre, l'étape de transmission d'informations de l'adaptateur (10) au dispositif de transaction électronique (60).

28. Procédé selon la revendication 27, dans lequel l'étape de transmission des informations de l'adaptateur (10) au dispositif de transaction électronique (60) comprend la transmission d'informations de confirmation au dispositif de transaction électronique (60).

29. Procédé selon la revendication 27, dans lequel l'étape de transmission d'informations de l'adaptateur (10) au dispositif de transaction électronique (60) comprend la transmission de réception électronique au dispositif de transaction électronique (60).

30. Procédé selon la revendication 23, comprenant, en outre, l'étape de purgeage des informations correspondant à la carte choisie après l'étape de transmission d'informations de l'adaptateur (10) au dispositif de transaction électronique (60).
